# EUROPÄISCHE PATENTSCHRIFT

(11) **EP 2 710 341 B1**
(45) Veröffentlichungstag und Bekanntmachung des Hinweises auf die Patenterteilung: **09.05.2018**
(21) Anmeldenummer: 12722708.0
(22) Anmeldetag: 14.05.2012
(51) Int. Cl.: G01J 3/10, G01J 3/02

(54) **SPEKTRAL EINSTELLBARE LICHTQUELLE ZUR BELEUCHTUNG EINES OBJEKTS**
SPECTRALLY ADJUSTABLE LIGHT SOURCE FOR ILLUMINATING AN OBJECT
SOURCE DE LUMIERE ADJUSTABLE SPECTRALEMENT POUR L'ECLAIRAGE D'OBJETS

(30) Priorität: 17.05.2011 DE 102011050421
(43) Veröffentlichungstag der Anmeldung: 26.03.2014
(73) Patentinhaber: Schiller, Monika, 96231 Bad Staffelstein (DE)
(72) Erfinder: SCHILLER, Carl-Albrecht, 96317 Kronach (DE)
(74) Vertreter: Sperschneider, Alexandra
(86) Internationale Anmeldenummer: PCT/EP2012/058869
(87) Internationale Veröffentlichungsnummer: WO 2012/156348

(56) Entgegenhaltungen:
- WO-A1-2010/137174
- US-A1- 2003 030 801
- US-B1- 6 495 818
- US-B1- 6 505 775
- US-B1- 7 148 967

## Beschreibung

Die Erfindung betrifft ein Verfahren und eine Lichtquellenvorrichtung zur Bereitstellung von Licht zur Beleuchtung eines Objekts, insbesondere für eine Anwendung in der Spektroskopie.

Lichtquellen, die sich kontinuierlich über verschiedene Wellenlängen bzw. Farben automatisch einstellen lassen, werden in vielen Bereichen der Naturwissenschaften benötigt. Ein typischer Anwendungsbereich ist eine Photostrom-Spektroskopie an Solarzellen. Ziel einer derartigen Photostrom-Spektroskopie ist es, die Effizienz von Solarzellen in Abhängigkeit von der Wellenlänge bzw. der Lichtfarbe zu bestimmen, um spezifische Aussagen über die Ausnutzung des solaren Spektrums zu gewinnen.

Es ist bereits bekannt, weißes Licht, beispielsweise aus Halogenlampen oder Xenonlampen, zu kollimieren und mittels eines automatisch verstellbaren Monochromators, beispielsweise eines Prismas oder eines Gitters, in seine Wellenlängen-Komponenten aufzuspalten. Ein ausgewähltes einfarbiges Lichtbündel wird mittels eines mechanischen Zerhackerrades (Chopper) moduliert und auf das zu untersuchende Objekt geleitet. Der im Objekt fließende Photostrom wird durch eine synchrone Messung detektiert. Der Verlauf des Photostromes über die Wellenlänge wird als Spektrum aufgezeichnet.

Die zur Realisierung der vorstehend beschriebenen Vorgehensweise benötigten Geräte sind sehr groß, sehr teuer und liefern nur eine sehr kleine Lichtleistung, da der überwiegende Teil der Leistung der weißen Lichtquelle ausgeblendet wird. Durch die Transparenz der verwendeten Gitter von meist kleiner als 30% selbst für die ausgewählte Wellenlänge geht weitere Leistung verloren. Wegen der geringen Lichtleistung ist die Verwendung einer Modulationstechnik unverzichtbar, um die Wirkung einer ausgewählten Wellenlänge eindeutig detektieren zu können. Dies gilt insbesondere auch deshalb, weil meist mit ungefilterten Zusatz-Lichtquellen gearbeitet werden muss, um einen realistischen Bias zu erzeugen.

Aus der DE 696 35 620 T2 ist eine Lichtquellenvorrichtung bekannt, welche einen eine Vielzahl von Lichtquellen aufweisenden Lichtquellenabschnitt zum Emittieren von Licht mit einer Vielzahl von Wellenlängen und ein Filter zum Auswählen von Licht mit einer einzigen Wellenlänge aus dem Licht mit einer Vielzahl von Wellenlängen und/oder zum separaten Ausgeben von Licht mit der ausgewählten Wellenlänge, wobei die ausgewählte Wellenlänge elektrisch variabel ist, aufweist. Der Filter gibt das Licht mit der ausgewählten Wellenlänge als Lichtstrahlen ± m-ter Ordnung und das übrige Licht als Lichtstrahl 0-ter Ordnung aus. Dabei werden die Lichtstrahlen ± m-ter Ordnung in Richtungen ausgegeben, die verschieden sind von einer Richtung, in die der Lichtstrahl 0-ter Ordnung ausgegeben wird. Des Weiteren enthält die bekannte Vorrichtung ein kombinierendes Bauteil, um die Lichtstrahlen ± m-ter Ordnung zu einem einzigen Lichtstrahl zu kombinieren.

Aus der DE 60 2004 008 809 T2 ist eine Vorrichtung zum Analysieren einer Mehrzahl von Proben in Probestellen auf einem Substrat bekannt. Diese Vorrichtung enthält ein Feld von voneinander beabstandeten Lichtquellen, die an einen bewegbaren Support gekoppelt sind, so dass eine oder mehrere der Lichtquellen selektiv verwendet werden kann bzw. können. Das Feld von Lichtquellen kann eine Mehrzahl von LED-Lampen umfassen, wobei jede aus der Mehrzahl von LED-Lampen Licht bei einer Wellenlänge unterschiedlich von den anderen der Mehrzahl von LED-Lampen emittiert.

Eine weitere Lichtquellenvorrichtung mit einem LED-Array, Kondensoroptiken und einem linear variablen Filter ist aus der US2003/0030801 A1 bekannt. Die Aufgabe der Erfindung besteht darin, ein Verfahren und eine Lichtquellenvorrichtung zur Bereitstellung von Licht zur Beleuchtung eines Objekts anzugeben, bei denen die Lichtintensität erhöht ist.

Diese Aufgabe wird durch ein Verfahren mit den im Anspruch 1 angegebenen Merkmalen und durch eine Lichtquellenvorrichtung mit den im Anspruch 7 angegebenen Merkmalen gelöst. Bei der vorliegenden Erfindung werden durch ein lineares Verschieben eines nebeneinander angeordnete, Licht unterschiedlicher Wellenlängenbereiche ausstrahlende LED-Einheiten aufweisenden Lichtarrays die LED-Einheiten nacheinander ausgewählt, die jeweils ausgewählte LED-Einheit eingeschaltet, das von der jeweils eingeschalteten LED-Einheit abgestrahlte Licht auf ein linear verschiebbares Filter fokusiert und das linear verschiebbare Filter derart verschoben, dass aus dem auf das Filter auftreffenden Licht Licht mit einem kleineren Wellenlängenbereich hindurchtritt.

Vorteilhafte Ausgestaltungen und Weiterbildungen eines Verfahrens mit den im Anspruch 1 angegebenen Merkmalen und einer Lichtquellenvorrichtung mit den im Anspruch 7 angegebenen Merkmalen sind in den abhängigen Patentansprüchen angegeben.

Die Vorteile eines Verfahrens und einer Lichtquellenvorrichtung mit den erfindungsgemäßen Merkmalen ergeben sich aus der nachfolgenden beispielhaften Erläuterung anhand der Figuren. Es zeigt
- Figur 1: eine perspektivische Skizze zur Veranschaulichung einer Lichtquellenvorrichtung gemäß der Erfindung,
- Figur 2: ein Diagramm zur Veranschaulichung der Spektren der LEDs eines aktiven LED-Paares,
- Figur 3: ein Diagramm zur Veranschaulichung des mittels einer Regelung erzielten Gesamtspektrums eines LED-Paares und
- Figur 4: ein Diagramm zur Veranschaulichung des mittels einer Regelung erzielten Gesamtspektrums aller LEDs der Lichtquellenvorrichtung.

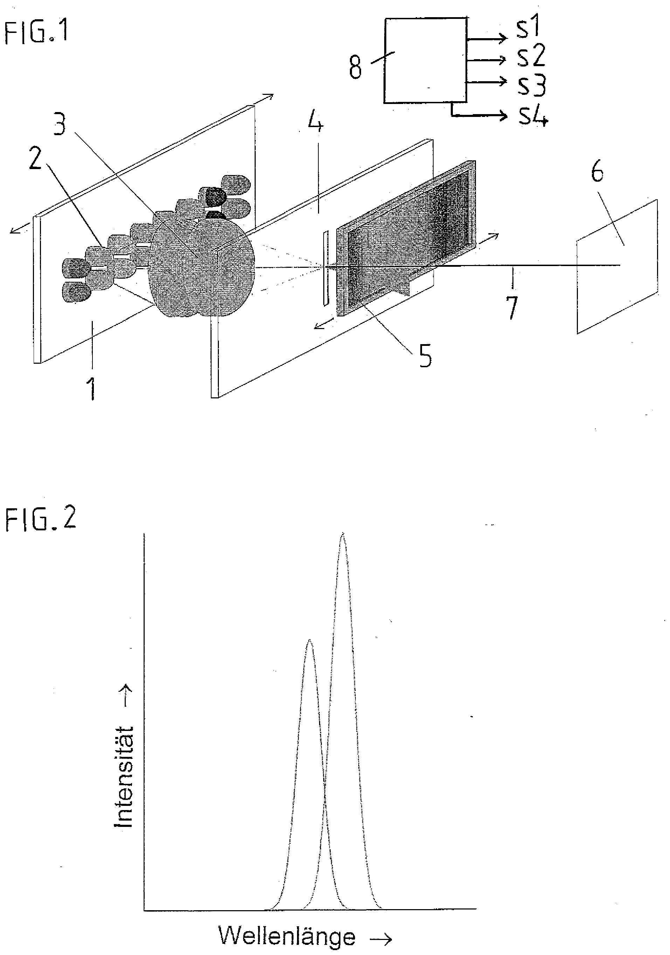

Die Figur 1 zeigt eine perspektivische Skizze zur Veranschaulichung einer Lichtquellenvorrichtung gemäß der Erfindung.

Die dargestellte Lichtquellenvorrichtung weist ein auf einem Träger 1 befestigtes LED-Array 2 auf. Das LED-Array 2 besteht aus einer Mehrzahl von nebeneinander angeordneten LED-Paaren, wobei die beiden LEDs eines LED-Paares jeweils übereinander angeordnet sind.

Jedes LED-Paar besteht aus einer LED, die im eingeschalteten Zustand Licht in einem etwas niedrigeren Wellenbereich abstrahlt, und einer LED, die im eingeschalteten Zustand Licht in einem etwas höheren Wellenbereich abstrahlt, wobei diese beiden Wellenlängenbereiche einander überlappen. Dies ist in der Figur 2 veranschaulicht, in welcher die Spektren der LEDs eines aktiven LED-Paares aufgezeichnet sind, wobei längs der Abszisse die Wellenlänge und längs der Ordinate die Intensität des ausgestrahlten Lichts aufgetragen ist.

Das einem LED-Paar benachbarte LED-Paar strahlt im eingeschalteten Zustand Licht in einem Wellenlängenbereich aus, der etwas höher ist als der Wellenlängenbereich des Lichts, in welchem das erstgenannte LED-Paar im eingeschalteten Zustand Licht abstrahlt, usw..

Folglich ist das LED-Array 2 in seiner Gesamtheit dazu in der Lage, Licht mit einem geforderten Wellenlängenbereich auszustrahlen.

Im Betrieb der Vorrichtung werden die LEDs bzw. die LED-Paare entsprechend ihrem Wellenlängenbereich nacheinander in die optische Achse 7 gebracht und selektiv eingeschaltet. Das Verbringen der LED-Paare in die optische Achse 7 erfolgt unter Steuerung durch eine Steuereinheit 8, welche Steuersignale s1 bereitstellt, aufgrund derer ein Träger 1, auf welchem die LEDs des LED-Arrays 2 befestigt sind, in Richtung der zu der Figur 1 am oberen Rand des Trägers 1 gezeichneten Pfeile, d. h. im rechten Winkel zur optischen Achse 7 der Vorrichtung, verschoben wird.

Folglich werden bei der vorliegenden Erfindung die LEDs, die überlappend den kompletten gewünschten Wellenlängenbereich überstreichen, in Abhängigkeit vom momentan gewünschten Wellenlängenbereich paarweise in die optische Achse der Vorrichtung verschoben und dann von der Steuereinheit 8, die ein zugehöriges Steuersignal s2 abgibt, eingeschaltet.

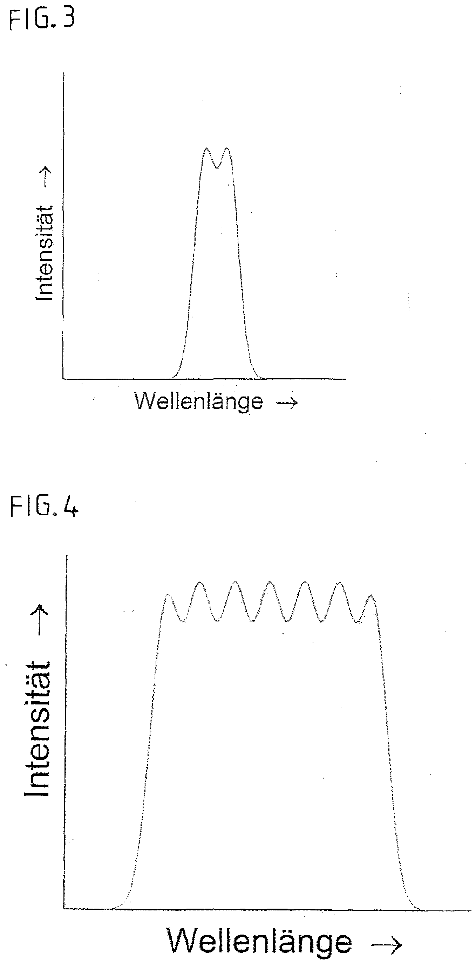

Die Steuereinheit 8 übt des Weiteren eine Regelfunktion aus, indem sie durch Abgabe von Steuersignalen s3 dafür sorgt, dass der jeweils bestehende Unterschied im Wirkungsgrad zweier übereinander angeordneter LEDs angeglichen wird, so dass sich eine annähernd glatte Wellenlängen- bzw. Leistungscharakteristik ergibt. Dies ist in der Figur 3 dargestellt, welche ein Diagramm zur Veranschaulichung des mittels dieser Regelung erzielten Gesamtspektrums eines LED-Paares zeigt.

Alle LED-Paare des Lichtarrays werden wiederum von der Steuereinheit 8 untereinander derart geregelt, dass sich über den gesamten Wellenlängenbereich der Vorrichtung eine annähernd glatte Wellenlängen- bzw. Leistungscharakteristik ergibt. Dies ist in der Figur 4 veranschaulicht, welche ein Diagramm zur Veranschaulichung des mittels der Regelung erzielten Gesamtspektrums der Gesamtvorrichtung zeigt.

Aus der Figur 1 ist ersichtlich, dass das vom momentan ausgewählten LED-Paar abgestrahlte Licht über eine Kondensoroptik 3 und eine nicht bewegliche Spaltblende 4 auf ein Filter 5 fokusiert wird.

Bei diesem Filter 5 handelt es sich um ein linear verschiebliches Filter, welches im Arbeitsbetrieb der Vorrichtung in der Fokusebene derart verschoben wird, dass aus dem typischerweise mehrere 10 nm breiten LED-Spektrum des momentan eingeschalteten LED-Paares ein schmalerer Wellenlängenbereich ausgewählt wird. Zu diesem Zweck stellt die Steuereinheit 8 ein Steuersignal s4 bereit, durch welches das linear verschiebliche Filter 5 im rechten Winkel zur optischen Achse 7 verschoben wird.

Im Arbeitsbetrieb der in der Figur 1 gezeigten Vorrichtung befinden sich alle aktiven optischen Komponenten in der optischen Achse 7 der Vorrichtung. Die Wellenlängenselektivität der Vorrichtung beruht nicht auf diffraktiven oder dispersiven Elementen wie Prismen, Gittern oder Kristallen. Sie beruht primär darauf, dass zunächst im Sinne einer Grobauswahl automatisch ein momentan gewünschter Wellenlängenbereich ausgewählt wird, indem das jeweils zugehörige LED-Paar in die optische Achse transportiert wird und dann die in die optische Achse transportierten LEDs eingeschaltet werden. Das von den momentan eingeschalteten LEDs ausgestrahlte Licht wird über die Kondensoroptik 3 und die Spaltblende 4 auf das Filter 5 fokusiert. Dieses Filter ist ein linear verschiebbares Filter, welches auf Basis von von der Steuereinheit 8 ausgegebenen Steuersignalen s4 im rechten Winkel zur optischen Achse 7 verschoben wird und zu einer Feinfilterung des durch die Spaltblende 4 hindurchgetretenen Lichtes dient. Dabei wird aus dem durch die Spaltblende 4 hindurchtretenden Licht ein noch schmalerer Wellenlängenbereich ausgefiltert, d. h. durchgelassen. Das auf diese Weise feingefilterte Licht wird an das Testobjekt 6 weitergeleitet und beleuchtet dieses Testobjekt 6 flächenförmig.

Eine Lichtquellenvorrichtung gemäß der Erfindung lässt sich in vorteilhafter Weise kompakt aufbauen. Sie erreicht im Vergleich zum Stand der Technik eine höhere Absolut-Intensität des monochromatischen Lichts. Durch eine Verwendung von bereits relativ schmalbandigen Emittern wird die gleiche Ausgangsleistung wesentlich ökonomischer aus einer niedrigeren aufgewendeten Eingangsleistung erzeugt. Durch eine Verwendung von bereits relativ schmalbandigen Emittern wird des Weiteren erreicht, dass eine unerwünschte Beimengung andersfarbigen Lichts weitab von der Nutzwellenlänge reduziert ist. Aufgrund der verwendeten Modulation über den LED-Speisestrom werden keinerlei mechanische Bauteile benötigt. Diese Modulation über den LED-Speisestrom lässt sich nahezu beliebig über kleine und große Amplituden steuern. Der Modulationsfrequenzbereich kann mehrere 100 KHz überstreichen, wodurch eine Intensitäts-Modulations-Spektrokospie ermöglicht wird. Durch mit dem Detektor synchrone Modulation kann auf eine störempfindlichere Lock-in-Technik verzichtet werden.

Eine vorteilhafte Weiterbildung der Erfindung besteht darin, die Verschiebbarkeit des Filters 5 so zu gestalten, dass das Filter 5 auch vollständig aus dem Strahlenweg verschoben werden kann. Der Vorteil dieser Möglichkeit besteht darin, dass in einem Anwendungsfall, bei welchem geringere Anforderungen an die Auflösung vorliegen, Licht mit höherer Leistung bereitgestellt werden kann. Dabei wird in vorteilhafter Weise vermieden, dass im Filter 5 Lichtleistung verbraucht wird.

## Patentansprüche

1. Verfahren zur Bereitstellung von Licht zur Beleuchtung eines Objekts (6) mit den Schritten:
- Bereitstellen einer Lichtquellenanordnung nach Anspruch 6;
- lineares Verschieben des nebeneinander angeordnete, Licht unterschiedlicher Wellenlängenbereiche ausstrahlende LED-Einheiten aufweisenden Lichtarrays (2), sodass die LED-Einheiten durch ein Verschieben in die optische Achse der Lichtquellenvorrichtung nacheinander ausgewählt, die jeweils ausgewählte LED-Einheit eingeschaltet, das von der jeweils eingeschalteten LED-Einheit abgestrahlte Licht auf ein linear verschiebbares Filter (5) fokussiert und das linear verschiebbare Filter derart verschoben wird, dass aus dem auf das linear verschiebbare Filter auftreffenden Licht mit dem Spektrum der momentan eingeschalteten LED-Einheit Licht mit einem schmaleren Wellenlängenbereich ausgewählt und durch das Filter hindurchgelassen wird und das Licht mit dem schmaleren Wellenlängenbereich zur Beleuchtung des Objekts verwendet wird.

2. Verfahren nach Anspruch 1, **dadurch gekennzeichnet, dass** das von der jeweils ausgewählten LED-Einheit abgestrahlte Licht unter Verwendung einer Kondensoroptik (3) und einer Spaltblende (4) auf das linear verschiebbare Filter (5) fokussiert wird.

3. Verfahren nach einem der vorhergehenden Ansprüche, **dadurch gekennzeichnet, dass** jede LED-Einheit ein LED-Paar mit zwei übereinander angeordneten LEDs aufweist, wobei die übereinander angeordneten LEDs einer LED-Einheit jeweils Licht unterschiedlicher, aber einander überlappender Wellenlängenbereiche ausstrahlen.

4. Verfahren nach Anspruch 3, **dadurch gekennzeichnet, dass** eine Regelung des von den beiden übereinander angeordneten LEDs ausgestrahlten Lichts derart durchgeführt wird, dass die Intensität des von den beiden übereinander angeordneten LEDs ausgestrahlten Lichts angeglichen wird.

5. Verfahren nach einem der vorhergehenden Ansprüche, **dadurch gekennzeichnet, dass** eine Regelung des von nebeneinander angeordneten LED-Einheiten ausgestrahlten Lichts derart durchgeführt wird, dass die Intensität des von den nebeneinander angeordneten LED-Einheiten ausgestrahlten Lichts angeglichen wird.

6. Lichtquellenvorrichtung zur Bereitstellung von Licht zur Beleuchtung eines Objekts, mit
- einem nebeneinander angeordnete, Licht unterschiedlicher Wellenlängenbereiche ausstrahlende LED-Einheiten aufweisenden linear verschiebbares Lichtarray (2),
- einer Kondensoroptik (3) zur Bündelung des vom Lichtarray (2) ausgestrahlten Lichts entlang einer optischen Achse (7),
- einer Spaltblende (4), durch welche das von der Kondensoroptik ausgegebene Licht hindurchtritt,
- einem linear verschiebbaren Filter (5), welches auf der vom Lichtarray (2) abgelegenen Seite der Spaltblende (4) angeordnet ist, und
- einer Steuereinheit (8),
wobei die Steuereinheit (8) dazu ausgebildet ist, Steuersignale derart bereitzustellen, dass durch ein lineares Verschieben des nebeneinander angeordnete, Licht unterschiedlicher Wellenbereiche ausstrahlende LED-Einheiten aufweisenden Lichtarrays (2) die LED-Einheiten durch ein Verschieben in die optische Achse der Lichtquellenvorrichtung nacheinander ausgewählt werden, die jeweils ausgewählte LED-Einheit eingeschaltet wird und das linear verschiebbare Filter (5) derart im rechten Winkel zur optischen Achse (7) verschoben wird, dass aus dem auf das linear verschiebbare Filter auftreffenden Licht mit dem Spektrum der momentan eingeschalteten LED-Einheit Licht mit einem schmaleren Wellenlängenbereich ausgewählt und durch das Filter hindurchgelassen wird und dem Objekt zu dessen Beleuchtung zuführbar ist.

7. Vorrichtung nach Anspruch 6 **dadurch gekennzeichnet, dass** eine LED-Einheit ein LED-Paar mit zwei übereinander angeordneten LEDs aufweist, die zur Ausstrahlung von Licht unterschiedlicher, aber einander überlappender Wellenlängenbereiche vorgesehen sind.

8. Vorrichtung nach Anspruch 7, **dadurch gekennzeichnet, dass** die Steuereinheit (8) dazu ausgebildet ist, eine Regelung des von den beiden übereinander angeordneten LEDs ausgestrahlten Lichts derart durchzuführen, dass die Intensität des von den beiden übereinander angeordneten LEDs ausgestrahlten Lichts angeglichen wird.

9. Vorrichtung nach einem der Ansprüche 6-8, **dadurch gekennzeichnet, dass** die Steuereinheit (8) dazu ausgebildet ist, eine Regelung des von nebeneinander angeordneten LED-Einheiten ausgestrahlten Lichts derart durchzuführen, dass die Intensität des von den nebeneinander angeordneten LED-Einheiten ausgestrahlten Lichts angeglichen wird.

10. Vorrichtung nach einem der Ansprüche 6-9 **dadurch gekennzeichnet, dass** die LED-Einheiten des Lichtarrays (2) auf einem linear verschiebbaren Träger (1) angeordnet sind.

11. Vorrichtung nach einem der Ansprüche 6-10, **dadurch gekennzeichnet, dass** die Verschiebbarkeit des linear verschiebbaren Filters (5) derart gestaltet ist, dass das Filter (5) vollständig aus dem Strahlenweg verschoben werden kann.

## Claims

1. Method of providing light for illumination of an object (6), comprising the steps of:
- providing a light source arrangement according to claim 6; and
- linearly displacing the light arrays (2), which are arranged adjacent to one another and comprise LED units radiating light of different wavelength ranges, so that the LED units are selected in succession through displacement in the optical axis of the light source device, the respectively selected LED unit is switched on, the light emitted by the respective switched-on LED unit is focussed on a linearly displaceable filter (5) and the linearly displaceable filter is so displaced that light with a narrower wavelength range is selected from the light, which is incident on the linearly displaceable filter, with the spectrum of the instantaneously switched-on LED unit and is allowed through the filter and the light with the narrower wavelength range is used for illumination of the object.

2. Method according to claim 1, **characterised in that** the light emitted by the respectively selected LED unit is focussed on the linearly displaceable filter (5) with use of a condenser optical system (3) and an aperture slot (4).

3. Method according to one of the preceding claims, **characterised in that** each LED unit comprises an LED pair with two LEDs arranged one above the other, wherein the LEDs arranged one above the other of an LED unit each radiate light of different, but mutually overlapping wavelength ranges.

4. Method according to claim 3, **characterised in that** regulation of the light radiated by the two LEDs arranged one above the other is carried out in such a way that the intensity of the light radiated by the two LEDs arranged one above the other is equalised.

5. Method according to any one of the preceding claims, **characterised in that** regulation of the light radiated by LED units arranged adjacent to one another is carried out in such a way that the intensity of the light radiated by the LED units arranged adjacent to one another is equalised.

6. Light source device for providing light for illumination of an object, comprising
- a linearly displaceable light array (2) comprising LED units arranged adjacent to one another and radiating light of different wavelength ranges,
- a condenser optical system (3) for focusing the light, which is radiated by the light array (2), along an optical axis (7),
- an aperture slot (4) through which the light exiting the condenser optical system passes,
- a linearly displaceable filter (5) arranged on the side of the aperture slot (4) remote from the light array (2) and
- a control unit (8),
wherein the control unit (8) is configured for the purpose of providing control signals in such a way through linear displacement of the light array (2), which comprises LED units arranged adjacent to one another and radiating light of different wave ranges, that the LED units are selected in succession by displacement in the optical axis of the light source device, the respectively selected LED unit is switched on and the linearly displaceable filter (5) is displaced in such a way at right angles to the optical axis (7) that light with a narrower wavelength range is selected from the light, which is incident on the linearly displaceable filter, with the spectrum of the instantaneously switched-on LED unit and is let through the filter and can be supplied to the object for illumination thereof.

7. Device according to claim 6, **characterised in that** an LED unit comprises an LED pair with two LEDs which are arranged one above the other and which are provided for radiation of light of different, but mutually overlapping wavelength ranges.

8. Device according to claim 7, **characterised in that** the control unit (8) is configured for the purpose of carrying out regulation of the light, which is radiated by the two LEDs arranged one above the other, in such a way that the intensity of the light radiated by the two LEDs arranged one above the other is equalised.

9. Device according to any one of claims 6 to 8, **characterised in that** the control unit (8) is configured for the purpose of regulation of the light, which is radiated by LED units arranged adjacent to one another, in such a way that the intensity of the light radiated by the LED units arranged adjacent to one another is equalised.

10. Device according to any one of claims 6 to 9, **characterised in that** the LED units of the light array (2) are arranged on a linearly displaceable support (1).

11. Device according to any one of claims 6 to 10, **characterised in that** the displaceability of the linearly displaceable filter (5) is such that the filter (5) can be moved completely out of the beam path.

## Revendications

1. Procédéde préparation d'une lumière destinée à éclairer un objet (6),comprenant les étapes suivantes :
- préparation d'undispositif de source lumineuse selon la revendication 6;
- déplacement linéaire du réseau lumineux (2) comportant des unités LED juxtaposées émettant des lumières de différentes longueurs d'onde, de manière à sélectionner successivement les unités LED par déplacement dans l'axe optique du dispositif de source lumineuse, à activer chaque unité LED sélectionnée, à focaliser la lumière émise par chaque unité LED activée sur un filtre (5) déplaçable linéairement et à déplacer le filtre déplaçable linéairement pour sélectionner, parmi la lumière incidente sur le filtre déplaçable linéairement présentant lespectrede l'unité LED momentanément activée, une lumière à plage de longueur d'onde étroite ,lui faire traverser le filtre, et pour utiliser la lumière à plage de longueur d'onde étroite pour l'éclairage de l'objet.

2. Procédé selon la revendication 1, caractérisé en ce quela lumière émise par chaque unité LED sélectionnée est focalisée sur le filtre (5) déplaçable linéairement en recourant à une optique de condensateur (3) et à un diaphragme à fente (4).

3. Procédé selon l'une des revendications précédentes, **caractérisé en ce que** chaque unité LED comprend une paire de LED constituée de deux LED superposées, dans lequel les LED superposées d'une unité LED émettent des lumières à plages de longueur d'onde différentes l'une de l'autre mais se chevauchent l'une l'autre.

4. Procédéselon la revendication 3, **caractérisé en ce qu'**une régulation de la lumière émise par les deux LED superposées est effectuée de manière à équilibrer l'intensité de la lumière émise par les deux LED superposées.

5. Procédéselon l'une des revendications précédentes, **caractérisé en ce qu'**une régulation de la lumière émise par des unités LED juxtaposées est effectuée de manière à équilibrer l'intensité de la lumière émise par les unités LED juxtaposées.

6. Dispositif de source lumineuse pour la préparation d'une lumière destinée à éclairer un objet, comprenant
- un réseau lumineux (2) déplaçable linéairement comportant des unités LED juxtaposées émettant des lumières de différentes longueurs d'onde,
- uneoptique de condensateur (3) pour la focalisation de la lumière émise par le réseau lumineux (2) le long d'un axe optique (7),
- undiaphragme à fente (4) que traverse la lumière sortant de l'optique de condensateur,
- unfiltre (5) déplaçable linéairement, disposé sur le côté distant du réseau lumineux (2) du diaphragme à fente (4), et
- une unité de commande (8),
dans lequel l'unité de commande (8) est prévue pour délivrer des signaux de commande permettant de sélectionner successivement les unités LED dans l'axe optique du dispositif de source lumineuse par déplacement linéaire du réseau lumineux (2) comportant les unités LED juxtaposées émettant des lumières de différentes longueurs d'onde, d'activerchaque unité LED sélectionnée, et de déplacer le filtre (5) déplaçable linéairement à angle droit par rapport à l'axe optique (7), de manière à sélectionner parmi la lumière incidente sur le filtre déplaçable linéairement présentant le spectre de l'unité LED momentanément activée, une lumière à plage de longueur d'onde étroite, à lui faire traverser le filtre, et à la diriger vers l'objet pour l'éclairage de celui-ci.

7. Dispositif selon la revendication 6, **caractérisé en ce qu'**une unité LED comprend une paire de LED constituée de deux LED superposées, prévues pour émettre des lumières à plages de longueur d'onde différentes l'une de l'autre mais se chevauchant l'une l'autre.

8. Dispositif selon la revendication 7, **caractérisé en ce que** l'unité de commande (8) est prévue pour effectuer une régulation de la lumière émise par les deux LED superposées de manière à équilibrer l'intensité de la lumière émise par les unités LED juxtaposées.

9. Dispositif selon l'une des revendications 6 à 8, **caractérisé en ce que** l'unité de commande (8) est prévue pour effectuer une régulation de la lumière émise par des unités LED juxtaposées de manière à équilibrer l'intensité de la lumière émise par les unités LED juxtaposées.

10. Dispositif selon l'une des revendications 6 à 9, **caractérisé en ce que** les unités LED du réseau lumineux (2) sont disposées sur un support (1) déplaçable linéairement.

11. Dispositif selon l'une des revendications 6 à 10, **caractérisé en ce que** le déplacement du filtre (5) déplaçable linéairement est prévu de manière à permettre le retrait de l'ensemble du filtre (5) hors du trajet des rayons.
